# EUROPÄISCHE PATENTANMELDUNG

(11) **EP 4 738 737 A1**
(43) Veröffentlichungstag der Anmeldung: **06.05.2026**
(21) Anmeldenummer: 25211608.2
(22) Anmeldetag: 28.10.2025
(51) Int. Cl.: H04L 1/00, H04L 9/40, G06F 21/60, G06F 21/64, G05B 19/418

(54) **VERFAHREN ZUM EMPFANGEN UND ÜBERPRÜFEN VON DATEN UND VERFAHREN ZUM SENDEN VON DATEN**

(30) Priorität: 30.10.2024 DE 102024210429
(71) Anmelder: Robert Bosch GmbH, 70442 Stuttgart (DE)
(72) Erfinder: Bindea, Bogdan-Nicusor, 400158 Cluj-Napoca (RO); Dulau, Tudor-Mircea, 400405 Cluj-Napoca city, Cluj county (RO); Rotar, Cristian, 400209 Cluj-Napoca, Cluj (RO)

(57) **Zusammenfassung**

Die Erfindung betrifft ein Verfahren zum Empfangen und Überprüfen von Daten, umfassend folgende, durch eine Empfängereinheit ausgeführte Schritte: Empfangen (302) eines Datensatzes aufweisend wenigstens ein Datenelement; Empfangen (304) eines ersten Integritätsmerkmals eines gesendeten Datensatzes, das eine Anzahl von Datenelementen des gesendeten Datensatzes charakterisiert, und eines zweiten Integritätsmerkmals des gesendeten Datensatzes, das eine Größe des gesendeten Datensatzes charakterisiert; Bestimmen (306) einer Anzahl von Datenelementen des empfangenen Datensatzes; Bestimmen (308, 310) einer Empfangsparität der Anzahl von Datenelementen des empfangenen Datensatzes und einer Sendeparität des ersten Integritätsmerkmals; Vergleichen (312) der Empfangsparität und der Sendeparität; wenn die Empfangsparität der Sendeparität entspricht, Vergleichen (314) der Anzahl von Datenelementen des empfangenen Datensatzes und der Anzahl von Datenelementen des gesendeten Datensatzes; wenn die Anzahl von Datenelementen des empfangenen Datensatzes der Anzahl von Datenelementen des gesendeten Datensatzes entspricht, Vergleichen (316) einer Größe des empfangenen Datensatzes mit der Größe des gesendeten Datensatzes; wenn die Größe des empfangenen Datensatzes der Größe des gesendeten Datensatzes entspricht, Feststellen (318) einer Datenintegrität des empfangenen Datensatzes; wenn einer der Vergleiche einen Unterschied ergibt, Feststellen (320) einer Datenkorruption des empfangenen Datensatzes.

## Beschreibung

Die vorliegende Erfindung betrifft ein Verfahren zum Empfangen und Überprüfen von Daten und ein Verfahren zum Senden von Daten sowie eine Recheneinheit und ein Computerprogramm zu dessen Durchführung.

### Hintergrund der Erfindung

Bei der Übertragung von Daten kann es von Bedeutung sein, empfangene Daten zu valideren und eine Integrität der empfangenen Daten zu verifizieren, z.B. um eine Manipulation von Daten, etwa im Zuge eines möglichen Angriffs, oder einen Fehler der Datenübertragung zu erkennen. Ein derartiger Validierungs- bzw. Verifizierungsprozess kann oftmals manuelle Eingriffe durch einen Benutzer oder einen Experten erfordern, der über ein ausreichendes Verständnis über manipulierte oder fehlerhafte Daten verfügt. Derartige manuelle Validierungsprozesse können jedoch mit hohem Aufwand und hoher Komplexität verbunden sein.

### Offenbarung der Erfindung

Erfindungsgemäß werden ein Verfahren zum Empfangen und Überprüfen von Daten und ein Verfahren zum Senden von Daten sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Das erfindungsgemäße Verfahren zum Empfangen und Überprüfen von Daten wird durch eine Empfängereinheit durchgeführt. Die Empfängereinheit empfängt einen Datensatz bzw. eine Datennachricht, wobei dieser Datensatz wenigstens ein Datenelement aufweist. Der Datensatz kann beispielsweise eine Nachricht sein, die aus einer Vielzahl von einzelnen Datenelementen zusammengesetzt ist.

Ferner empfängt die Empfängereinheit ein erstes Integritätsmerkmal und ein zweites Integritätsmerkmal des gesendeten Datensatzes.

Das erste Integritätsmerkmal charakterisiert eine Anzahl von Datenelementen des gesendeten Datensatzes. Anhand dieses ersten Integritätsmerkmals kann insbesondere überprüft werden, ob sich die Anzahl der Datenelemente des gesendeten Datensatzes nach dessen Aussenden verändert hat. Das zweite Integritätsmerkmal charakterisiert eine Größe des gesendeten Datensatzes. Beispielsweise kann das zweite Integritätsmerkmal eine jeweilige Größe jedes einzelnen Datenelements des gesendeten Datensatzes charakterisieren oder eine gesamte Größe aller Datenelemente zusammen oder eine gesamte Größe des gesamten gesendeten Datensatzes. Anhand dieses zweiten Integritätsmerkmals kann insbesondere überprüft werden, ob aus dem gesendeten Datensatz Daten entfernt wurden oder ob Daten hinzugefügt wurden.

Diese Integritätsmerkmale charakterisieren somit insbesondere den empfangenen Datensatz dahingehend, wie er ursprünglich gesendet wurde. Insbesondere stellen diese Integritätsmerkmale jeweils Validierungsmerkmale oder Verifikationsmerkmale dar, anhand welcher die Empfängereinheit überprüfen kann, ob sich der Datensatz verändert hat, nachdem er gesendet wurde und bevor er durch die Empfängereinheit empfangen wurde, z.B. durch eine Manipulation, etwa im Zuge eines Angriffs, oder durch einen Fehler der Datenübertragung. Insbesondere stellen die Integritätsmerkmale Metadaten dar, welche Informationen oder Eigenschaften des gesendeten Datensatzes beschreiben.

Auf das Empfangen des Datensatzes und der Integritätsmerkmale hin bestimmt die Empfängereinheit eine Anzahl von Datenelementen des empfangenen Datensatzes. Ferner bestimmt die Empfängereinheit eine Empfangsparität (d.h. gerade oder ungerade) der Anzahl von Datenelementen des empfangenen Datensatzes und eine Sendeparität (d.h. gerade oder ungerade) des ersten
Integritätsmerkmals, also eine Sendeparität der Anzahl von Datenelementen des gesendeten Datensatzes. Die Empfängereinheit bestimmt somit, ob es sich bei der der Anzahl von Datenelementen des empfangenen Datensatzes und des gesendeten Datensatzes jeweils um eine gerade oder ungerade Zahl handelt.

Die Empfängereinheit vergleicht die Empfangsparität und die Sendeparität. Insbesondere vergleicht die Empfängereinheit somit, ob die Anzahl der Datenelemente des gesendeten Datensatzes und die Anzahl der Datenelemente des empfangenen Datensatzes jeweils gerade oder ungerade ist. Sollte eine der beiden Anzahlen von Datenelementen gerade sein, die andere Anzahl jedoch ungerade, deutet dies auf eine Änderung der gesendeten Daten hin. **In** diesem Fall stellt die Empfängereinheit eine Datenkorruption des empfangenen Datensatzes fest.

Wenn hingegen die Empfangsparität der Sendeparität entspricht, vergleicht die Empfängereinheit in einem nächsten Schritt die Anzahl von Datenelementen des empfangenen Datensatzes und die Anzahl von Datenelementen des gesendeten Datensatzes (aus dem ersten Integritätsmerkmal). Wenn die beiden Anzahlen nicht übereinstimmen, deutet dies auf eine Änderung der gesendeten Daten hin. In diesem Fall stellt die Empfängereinheit eine Datenkorruption des empfangenen Datensatzes fest.

Wenn hingegen die Anzahl von Datenelementen des empfangenen Datensatzes der Anzahl von Datenelementen des gesendeten Datensatzes entspricht, vergleicht die Empfängereinheit in einem nächsten Schritt eine Größe des empfangenen Datensatzes mit der Größe des gesendeten Datensatzes (aus dem zweiten Integritätsmerkmal). Wenn diese verglichenen Größen nicht übereinstimmen, deutet dies auf eine Änderung der gesendeten Daten hin. In diesem Fall stellt die Empfängereinheit eine Datenkorruption des empfangenen Datensatzes fest.

Wenn hingegen die Größe des empfangenen Datensatzes der Größe des gesendeten Datensatzes entspricht, stellt die Empfängereinheit eine Datenintegrität des empfangenen Datensatzes fest.

Durch diese schrittweise aufeinander aufbauenden Vergleiche kann die Empfängereinheit zweckmäßigerweise darauf rückschließen, ob sich der Datensatz verändert hat, nachdem er gesendet wurde, z.B. durch eine Manipulation oder einen Fehler der Datenübertragung. Insbesondere können durch diese Vergleiche die Integrität bzw. Genauigkeit der empfangenen Daten im Vergleich zu den ursprünglich gesendeten Daten schnell und einfach überprüft werden. Wenn bereits einer dieser Vergleiche einen Unterschied ergibt bzw. fehlschlägt, stellt die Empfängereinheit fest, dass keine Datenintegrität gegeben ist und beendet das Verfahren. Nur wenn alle diese Vergleiche erfolgreich sind und die jeweiligen miteinander verglichenen Werte jeweils übereinstimmen, kann darauf rückgeschlossen werden, dass keine Manipulation des Datensatzes und kein Fehler der Datenübertragung vorliegen und dass eine Datenintegrität gegeben ist. Das Verfahren benötigt wenige Rechen- und Speicherkapazität und ist auch insbesondere in einfachen Recheneinheiten, wie eingebetteten Systemen oder Busteilnehmern (z.B. CAN-Bus), leicht implementierbar.

Die Erfindung betrifft ferner ein Verfahren zum Senden von Daten, insbesondere um das oben beschriebene Überprüfen von empfangenen Daten zu ermöglichen. Vorteile und Ausführungsformen des erfindungsgemäßen Verfahrens zum Empfangen und Überprüfen von Daten und des erfindungsgemäßen Verfahrens zum Senden von Daten ergeben sich aus der vorliegenden Beschreibung in entsprechender Weise.

Das erfindungsgemäße Verfahren zum Senden von Daten wird durch eine Sendereinheit durchgeführt. Die Sendereinheit sendet den jeweiligen Datensatz aufweisend wenigstens ein Datenelement an die Empfängereinheit. Ferner bestimmt die Sendereinheit das erste Integritätsmerkmal und das zweite Integritätsmerkmal dieses gesendeten Datensatzes und sendet diese Integritätsmerkmale an die Empfängereinheit. Beispielsweise kann die Sendereinheit die Integritätsmerkmale zum Zeitpunkt des Aussendens des Datensatzes bestimmen oder auch kurz vor bzw. unmittelbar vor dem Zeitpunkt des Aussendens. Die Sendereinheit kann den Datensatz und das wenigstens eine Integritätsmerkmal beispielsweise nacheinander oder auch zusammen an die Empfängereinheit übertragen.

Die vorliegende Erfindung ermöglicht es, eine Datenintegrität bei der Übertragung von Daten auf aufwandsarme Weise überprüfen zu können. Besonders zweckmäßig stellt die Erfindung einen automatisierten, optimierten, systematischen, generischen, standardisierten Validierungsprozess zur Überprüfung von Daten bereit. Durch das Bestimmen und Übermitteln der Integritätsmerkmale bzw. durch das Vergleichen der Integritätsmerkmale mit entsprechenden Merkmalen des empfangen Datensatzes kann besonders zweckmäßig eine automatische Überprüfung der Datenintegrität ermöglicht werden. Insbesondere ist für diese Überprüfung der Datenintegrität kein manuelles Eingreifen eines Benutzers oder Experten erforderlich, wodurch Kosten gesenkt werden können und die Effizienz erhöht werden kann. Durch die automatische Überprüfung der Datenintegrität kann es insbesondere ermöglicht werden, einen Fehler der Datenübertragung sowie eine Manipulation von Daten frühzeitig zu erkennen. Etwaige Angriffe mittels manipulierter Daten können insbesondere verhindert werden. Insbesondere kann eine Datenintegrität innerhalb dynamischer und komplexer Datenerfassungssysteme, Datenübertragungssysteme oder Datenverarbeitungssysteme gewährleistet werden. Ferner kann insbesondere Klarheit über die Qualität der in einem jeweiligen System verwendeten Daten geschaffen werden und die Robustheit der Datenverarbeitungs-Pipeline kann verbessert werden.

Gemäß einer Ausführungsform wird der empfangene Datensatz durch die Empfängereinheit verarbeitet, wenn die Datenintegrität des empfangenen Datensatzes festgestellt wird. Der empfangene Datensatz kann in diesem Fall als sicher angesehen werden und für die weitere Verarbeitung freigegeben werden. Beispielsweise kann das Verarbeiten des empfangenen Datensatzes ein Ansteuern einer technischen Vorrichtung umfassen bzw. bewirken. Die Empfängereinheit kann beispielsweise ein Steuergerät oder eine Steuereinheit zum Ansteuern der technischen Vorrichtung sein. Durch das Verarbeiten des empfangenen Datensatzes können beispielsweise Ansteuerwerte bzw. Ansteuerdaten zum Ansteuern der technischen Vorrichtung bestimmt werden. Eine derartige technische Vorrichtung kann beispielsweise ein (Kraft-)Fahrzeug oder ein Antrieb eines Fahrzeugs sein, beispielsweise eine elektrische Maschine oder eine Brennkraftmaschine. Die Sendereinheit kann beispielsweise ein weiteres Steuergerät bzw. eine weitere Steuereinheit oder ein Sensor der technischen Vorrichtung sein oder auch eine externe Einheit, welche mit der technischen Vorrichtung kommuniziert, z.B. eine entfernte Recheneinheit wie ein Server oder ein Rechensystem, beispielsweise auch im Sinne des Cloud-Computing.

Gemäß einer Ausführungsform führt die Empfängereinheit eine vorgegebene Maßnahme durch, wenn die Datenkorruption des empfangenen Datensatzes festgestellt wird. Der empfangene Datensatz kann in diesem Fall als nicht sicher bzw. nicht integer eingestuft werden und eine weitere Verarbeitung des Datensatzes kann unterbunden werden. Durch die vorgegebene Maßnahme kann insbesondere verhindert werden, dass manipulierte oder fehlerhafte Daten in der jeweiligen technischen Vorrichtung verarbeitet werden, was zu einer Gefahr für den Betrieb der technischen Vorrichtung oder gar zu einer Gefährdung von Menschen führen könnte.

Gemäß einer Ausführungsform kann als vorgegebene Maßnahme eine Fehlermeldung ausgesendet werden, z.B. an die Sendereinheit oder eine externe Einheit, welche mit der technischen Vorrichtung kommuniziert, z.B. eine entfernte Recheneinheit wie ein Server oder ein Rechensystem, beispielsweise auch im Sinne des Cloud-Computing, um die Sendereinheit bzw. die externe Einheit über die Veränderung des Datensatz zu informieren. Alternativ oder zusätzlich kann als vorgegebene Maßnahme ein Eintrag in einem Fehlerspeicher erstellt werden. Alternativ oder zusätzlich kann der empfangene Datensatz als vorgegebene Maßnahme verworfen bzw. gelöscht werden.

Gemäß einer Ausführungsform umfasst das Vergleichen der Größe des empfangenen Datensatzes mit der Größe des gesendeten Datensatzes ein Vergleichen, ob eine Größe der einzelnen Datenelemente des gesendeten Datensatzes jeweils mit der Größe der einzelnen Datenelemente des empfangenen Datensatzes übereinstimmt. Beispielsweise kann die jeweilige Größe jedes Datenelements des gesendeten Datensatzes mit der jeweiligen Größe des entsprechenden Datenelements des empfangenen Datensatz verglichen werden. Alternativ oder zusätzlich kann auch die gesamte Größe aller Datenelemente des gesendeten Datensatzes mit der gesamten Größe aller Datenelemente des empfangenen Datensatz verglichen werden. Wenn zumindest eines der verglichenen Größenpaare nicht übereinstimmt, deutet dies auf eine Änderung der gesendeten Daten hin und es wird insbesondere eine Datenkorruption festgestellt.

Alternativ oder zusätzlich umfasst das Vergleichen der Größe des empfangenen Datensatzes mit der Größe des gesendeten Datensatzes gemäß einer Ausführungsform, ob eine Größe des gesendeten Datensatzes mit einer Größe des empfangenen Datensatzes übereinstimmt. Im Gegensatz zu dem Vergleich der Größen der einzelnen Datenelemente kann bei diesem Vergleich der Größen der gesamten Datensätze beispielsweise auch ein Header und dergleichen (allgemein Übertragungs- und Verwaltungsinformationen) der Datensätze berücksichtigt werden. Wenn die Größen der Datensätze nicht übereinstimmen, deutet dies auf eine Veränderung der gesendeten Daten hin. Insbesondere wird dann eine Datenkorruption festgestellt.

Gemäß einer Ausführungsform sendet die Empfängereinheit eine Anfrage bzw. eine Datenanfrage zum Senden des Datensatzes an die Sendereinheit. Die Sendereinheit empfängt diese durch die Empfängereinheit gesendete Anfrage und sendet daraufhin den Datensatzes an die Empfängereinheit. Die Empfängereinheit empfängt daraufhin den Datensatz. Insbesondere kann es durch die Erfindung ermöglicht werden, dass die Empfängereinheit die angefragten Daten automatisch auf deren Integrität überprüfen kann.

Die Erfindung eignet sich für eine Vielzahl von unterschiedlichen technischen Anwendungsgebieten. Besonders zweckmäßig eignet sich die Erfindung zur Anwendung im (Kraft-)Fahrzeugbereich. Die Empfängereinheit kann insbesondere als ein Steuergerät eines Fahrzeugs ausgebildet sein, z.B. als ein Motor- oder Fahrzeugsteuergerät. Durch Verarbeiten des empfangenen Datensatzes in der Empfängereinheit kann insbesondere eine Fahrzeugfunktion gesteuert bzw. ausgeführt werden, z.B. im Zuge einer Motorsteuerung. Die Sendereinheit kann beispielsweise ein Sensor des Fahrzeugs oder ein weiteres Steuergerät des Fahrzeugs sein oder auch eine externe Einheit, die mit dem Fahrzeug kommuniziert, z.B. eine entfernte Recheneinheit wie ein Server oder ein Rechensystem im Sinne des Cloud-Computing. Durch die Erfindung kann insbesondere erkannt werden, wenn manipulierte oder fehlerhafte Daten an das Fahrzeug übermittelt werden, und es kann verhindert werden, dass manipulierte oder fehlerhafte Daten in dem Fahrzeug verarbeitet werden, was zu einer Gefährdung des Fahrzeugbetriebs oder gar zu einer Gefährdung von Fahrzeuginsassen oder weiteren Verkehrsteilnehmern führen könnte.

Eine erfindungsgemäße Recheneinheit, z.B. ein Steuergerät eines Kraftfahrzeugs oder eine Logikeinheit eines Sensors, ist, insbesondere programmtechnisch, dazu eingerichtet, ein erfindungsgemäßes Verfahren durchzuführen. Die erfindungsgemäße Recheneinheit ist zweckmäßigerweise dazu eingerichtet, sowohl eine Ausführungsform des erfindungsgemäßen Verfahrens zum Empfangen und Überprüfen von Daten als auch eine Ausführungsform des erfindungsgemäßen Verfahrens zum Senden von Daten auszuführen. Die Recheneinheit kann zweckmäßigerweise sowohl als Empfängereinheit oder auch als Sendereinheit fungieren, je nachdem ob die Recheneinheit Daten an eine weiter Recheneinheit senden oder von einer weiteren Recheneinheit empfangen soll.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch ein System aus Recheneinheiten, die jeweils dazu eingerichtet sind, eine Ausführungsform eines erfindungsgemäßen Verfahrens durchzuführen.
- Figur 2: zeigt schematisch eine Ausführungsform eines erfindungsgemäßen Verfahrens als ein Blockdiagramm.
- Figur 3: zeigt schematisch eine Ausführungsform eines erfindungsgemäßen Verfahrens als ein Blockdiagramm.

### Ausführungsform(en) der Erfindung

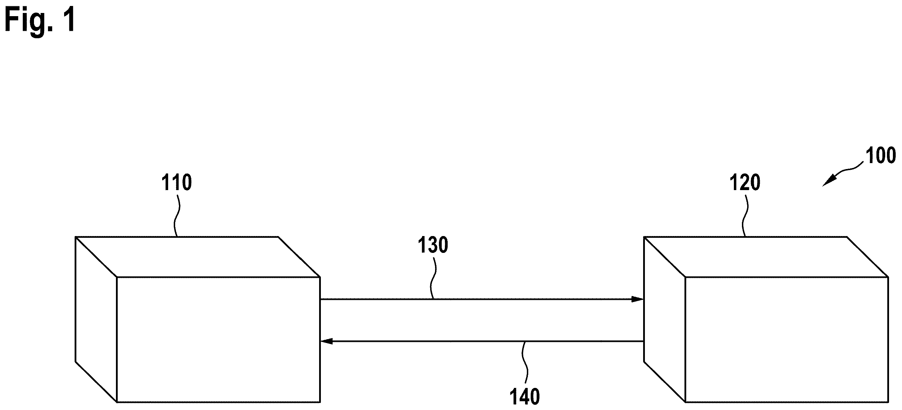

Figur 1 zeigt ein Datenübertragungssystem 100 aus Recheneinheiten 110 und 120, die miteinander in Kommunikationsverbindung stehen, z.B. über eine Programmierschnittstelle bzw. Anwendungsschnittstelle (engl. "application programming interface", API) oder über eine Datenbankverbindungen, z.B. gemäß dem sog. Datenformat bzw. dem Datenaustauschformat JSON (JavaScript Object Notation).

Beispielsweise kann die Recheneinheit 110 als ein Steuergerät eines Fahrzeugs ausgebildet sein, z.B. als ein Motor- oder Fahrzeugsteuergerät. Die Recheneinheit 120 kann beispielsweise als eine externe Einheit ausgebildet sein, z.B. als ein Server. Das Steuergerät 110 sendet beispielsweise eine Anfrage 130 an den Server 120, um Daten an das Steuergerät 110 zu übermitteln, z.B. eine aktualisierte Version einer auf dem Steuergerät 110 ausgeführten Software. Auf die Anfrage 130 hin sendet der Server 120 die jeweiligen Daten als einen Datensatz 140 an das Steuergerät 110.

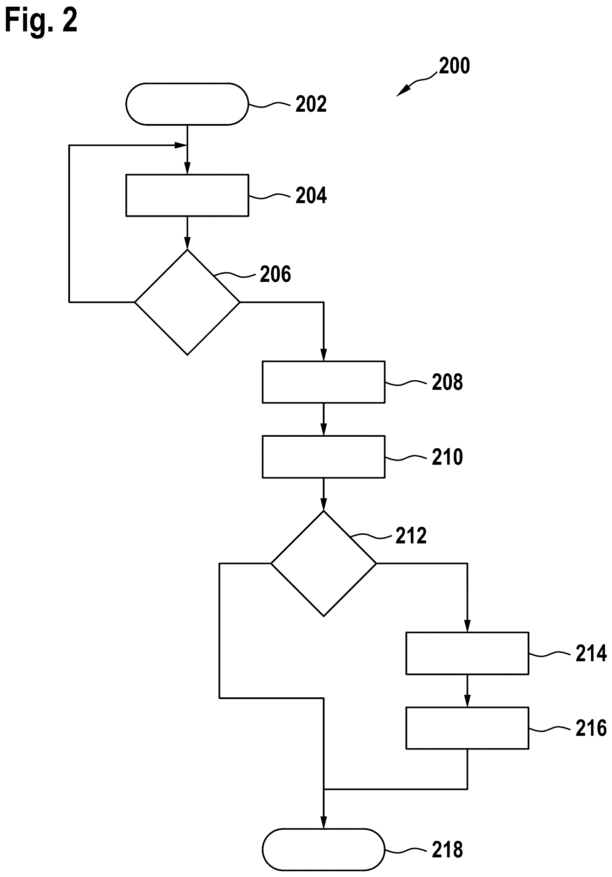

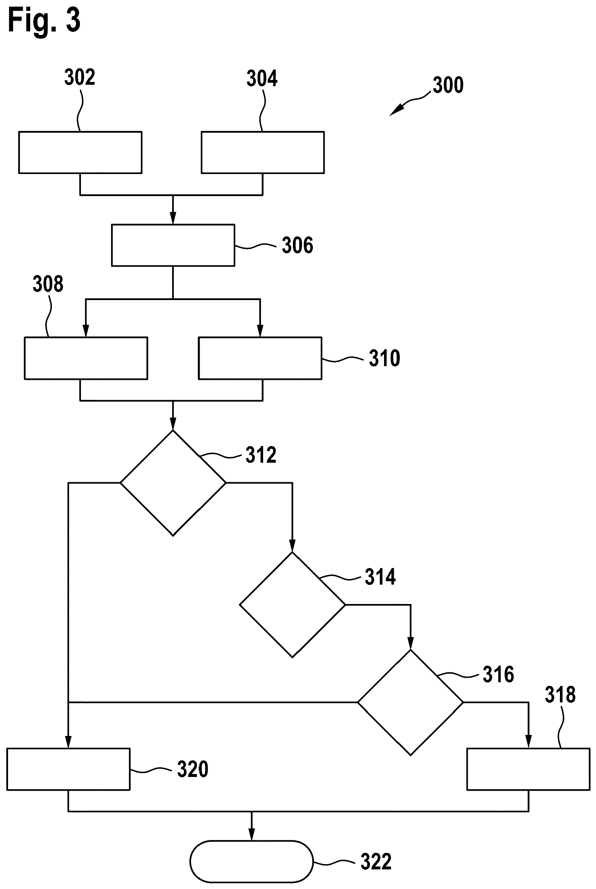

Damit das Steuergerät 110 eine Integrität der empfangenen Daten überprüfen kann, sind das Steuergerät 110 und der Server 120 jeweils, insbesondere programmtechnisch, dazu eingerichtet, eine Ausführungsform eines erfindungsgemäßen Verfahrens durchzuführen, wie nachfolgend in Bezug auf die Figuren 2 und 3 erläutert wird.

Figur 2 zeigt eine Ausführungsform eines erfindungsgemäßen Verfahrens als ein schematisches Blockdiagramm 200. Das Steuergerät 110 soll in diesem Beispiel als eine Empfängereinheit fungieren und der Server 120 als eine Sendereinheit.

In einem Schritt 202 wird mit ein Verbindungsaufbau begonnen. In einem Schritt 204 wird eine Verbindung zwischen dem Steuergerät 110 und dem Server 120 hergestellt. In einem Schritt 206 wird überprüft, ob die Verbindung erfolgreich hergestellt wurde und ob es sich um eine valide Verbindung handelt. Wenn dies nicht der Fall ist, wird erneut Schritt 204 durchgeführt. Wenn hingegen eine valide Verbindung erfolgreich hergestellt wurde, wird eine Kommunikation zwischen dem Steuergerät 110 und dem Server 120 freigegeben.

In einem Schritt 208 sendet das Steuergerät 110 die Anfrage 130 an den Server 120, um die jeweiligen Daten an das Steuergerät 110 zu übermitteln. In einem Schritt 210 empfängt der Server 120 die Anfrage. In einem Schritt 212 überprüft und validiert der Server 120 die empfangene Anfrage. Wenn es sich um keine valide Anfrage handelt, verwirft der Server 120 die Anfrage und beendet das Verfahren in Schritt 218.

Wenn es sich um eine valide Anfrage handelt, sendet der Server 120 in Schritt 214 auf die Anfrage 130 hin die jeweiligen Daten als Datensatz bzw. Datennachricht an das Steuergerät 110, wobei dieser Datensatz einen oder mehrere Datenelemente aufweist. Ferner bestimmt der Server 120 ein erstes Integritätsmerkmal, das eine Anzahl der Datenelemente des gesendeten Datensatzes charakterisiert, und ein zweites Integritätsmerkmal, das eine Größe des gesendeten Datensatzes charakterisiert. Der Server 120 sendet diese Integritätsmerkmale ebenfalls an das Steuergerät 110, zweckmäßigerweise gemeinsam mit dem Datensatz. Beispielsweise kann der Server 120 als das erste Integritätsmerkmal die konkrete Anzahl der Datenelemente des gesendeten Datensatzes bestimmten und als das zweite Integritätsmerkmal die gesamte Größe des gesendeten Datensatzes.

In Schritt 216 empfängt das Steuergerät 110 den Datensatz und die Integritätsmerkmale. Das Steuergerät 110 führt daraufhin eine Überprüfung der Datenintegrität des empfangenen Datensatzes abhängig von den empfangenen Integritätsmerkmalen durch. Wenn das Steuergerät 110 im Zuge dieser Überprüfung die Integrität des empfangenen Datensatzes verifizieren kann, verarbeitet das Steuergerät 110 die empfangenen Daten. Ansonsten führt das Steuergerät 110 eine vorgegebene Maßnahme durch. Das Verfahren endet daraufhin in Schritt 218. Die in Schritt 216 durchgeführte Überprüfung der Datenintegrität durch das Steuergerät 110 wird nachfolgend in Bezug auf Figur 3 näher erläutert.

Figur 3 zeigt eine Ausführungsform eines erfindungsgemäßen Verfahrens als ein schematisches Blockdiagramm 300. Entsprechend zu der obigen Erläuterung zu Figur 2 fungiert auch in diesem Beispiel der Figur 3 das Steuergerät 110 als Empfängereinheit und der Server 120 als Sendereinheit.

In Schritt 302 empfängt das Steuergerät 110 den jeweiligen Datensatz. In Schritt 304 empfängt das Steuergerät 110 die Integritätsmerkmale. Die Reihenfolge der Schritte 302 und 304 ist beliebig. In Schritt 306 bestimmt das Steuergerät 110 eine Anzahl von Datenelementen des in Schritt 302 empfangenen Datensatzes.

In Schritt 308 bestimmt das Steuergerät 110 eine Empfangsparität der Anzahl von Datenelementen des empfangenen Datensatzes. Das Steuergerät 110 bestimmt somit, ob die Anzahl der Datenelemente des gesendeten Datensatzes eine gerade oder ungerade Zahl ist. In Schritt 310 bestimmt das Steuergerät 110 eine Sendeparität des ersten Integritätsmerkmals, also eine Parität der Anzahl von Datenelementen des gesendeten Datensatzes. Somit bestimmt das Steuergerät 110, ob die Anzahl der Datenelemente des empfangenen Datensatzes eine gerade oder ungerade Zahl ist. Die Reihenfolge der Schritte 308 und 310 ist beliebig.

In Schritt 312 vergleicht das Steuergerät 110 die Empfangsparität und die Sendeparität miteinander. Das Steuergerät 110 bestimmt somit, ob die Anzahl der Datenelementen des gesendeten Datensatzes und die Anzahl der Datenelementen des empfangenen Datensatzes jeweils eine gerade Zahl oder jeweils eine ungerade Zahl ist. Wenn einer der beiden Zahlen gerade ist und die andere Zahl jedoch ungerade, deutet dies darauf hin, dass sich der Datensatz geändert hat, nachdem er von dem Server 120 gesendet wurde. In diesem Fall stellt das Steuergerät 110 in Schritt 320 eine Datenkorruption fest. Wenn hingegen beide Zahlen jeweils gerade oder jeweils ungerade sind, führt das Steuergerät 110 in Schritt 314 einen weiteren Vergleich durch.

In Schritt 314 vergleicht das Steuergerät 110, ob die Anzahl der Datenelemente des gesendeten Datensatzes mit der Anzahl der Datenelemente des empfangenen Datensatz übereinstimmt. Wenn die beiden Anzahlen nicht übereinstimmen, deutet dies auf eine Änderung des gesendeten Datensatzes hin. **In** diesem Fall stellt das Steuergerät 110 in Schritt 320 eine Datenkorruption fest. Wenn hingegen die beiden Anzahlen identisch sind, führt das Steuergerät 110 in Schritt 316 einen weiteren Vergleich durch.

In Schritt 316 vergleicht das Steuergerät 110, ob die Größe des gesendeten Datensatzes mit der Größe des empfangenen Datensatz übereinstimmt. Wenn die Größen der Datensätze nicht übereinstimmen, deutet dies auf eine Änderung des gesendeten Datensatzes hin und das Steuergerät 110 stellt in Schritt 320 eine Datenkorruption fest. Wenn hingegen die beiden Größen identisch sind, bestimmt das Steuergerät 110 in Schritt 318, dass eine Datenintegrität des empfangenen Datensatzes gegeben ist.

Das Steuergerät 110 bestimmt also insbesondere nur dann in Schritt 318, dass die Datenintegrität gegeben ist, wenn alle drei Vergleiche der Schritte 312, 314 und 316 erfolgreich sind und wenn die jeweiligen in den Schritten 312, 314 und 316 miteinander verglichenen Werte jeweils übereinstimmen. Wenn bereits einer der Vergleich der Schritte 312, 314 und 316 fehlschlägt, stellt das Steuergerät 110 in Schritt 320 eine Datenkorruption des empfangenen Datensatzes fest.

Wenn das Steuergerät die Datenintegrität in Schritt 318 verifiziert hat, verarbeitet das Steuergerät 110 den empfangenen Datensatz. Beispielsweise kann das Steuergerät 110 die entsprechende aktualisierte Version der jeweiligen Software installieren und ausführen.

In Schritt 322 kann das Verfahren daraufhin beendet werden.

Wenn das Steuergerät 110 jedoch in Schritt 320 eine Datenkorruption feststellt, führt das Steuergerät 110 eine vorgegebene Maßnahme durch. Beispielsweise kann das Steuergerät 110 als derartige Maßnahme eine Fehlermeldung an den Server 120 senden, um diesen über die Veränderung des Datensatz zu informieren. Ferner kann Steuergerät 110 als vorgegebene Maßnahme einen Eintrag in einem Fehlerspeicher erstellen und den empfangenen Datensatz löschen.

In Schritt 322 kann das Verfahren daraufhin beendet werden.

Die vorliegende Erfindung stellt somit einen automatisierten, optimierten, systematischen, generischen, standardisierten Validierungsprozess zur Überprüfung von Daten bereit. Die Datenintegrität bei der Übertragung von Daten kann automatisch überprüft werden, ohne manuelles Eingreifen eines Benutzers. Ein Fehler der Datenübertragung oder eine Manipulation der übertragenen Daten können automatisch erkannt werden. Besonders zweckmäßig kann durch die Erfindung verhindert werden, dass durch das Fahrzeugsteuergerät manipulierte oder fehlerhafte Daten verarbeitet werden, was zu einer Gefährdung des Fahrzeugbetriebs oder zu einer Gefährdung von Fahrzeuginsassen oder von weiteren Verkehrsteilnehmern führen könnte.

## Patentansprüche

1. Verfahren zum Empfangen und Überprüfen von Daten, umfassend folgende, durch eine Empfängereinheit (110) ausgeführte Schritte:
Empfangen (302) eines Datensatzes aufweisend wenigstens ein Datenelement;
Empfangen (304) eines ersten Integritätsmerkmals eines gesendeten Datensatzes, das eine Anzahl von Datenelementen des gesendeten Datensatzes charakterisiert, und eines zweiten Integritätsmerkmals des gesendeten Datensatzes, das eine Größe des gesendeten Datensatzes charakterisiert;
Bestimmen (306) einer Anzahl von Datenelementen des empfangenen Datensatzes;
Bestimmen (308, 310) einer Empfangsparität der Anzahl von Datenelementen des empfangenen Datensatzes und einer Sendeparität des ersten Integritätsmerkmals;
Vergleichen (312) der Empfangsparität und der Sendeparität;
wenn die Empfangsparität der Sendeparität entspricht, Vergleichen (314) der Anzahl von Datenelementen des empfangenen Datensatzes und der Anzahl von Datenelementen des gesendeten Datensatzes;
wenn die Anzahl von Datenelementen des empfangenen Datensatzes der Anzahl von Datenelementen des gesendeten Datensatzes entspricht, Vergleichen (316) einer Größe des empfangenen Datensatzes mit der Größe des gesendeten Datensatzes;
wenn die Größe des empfangenen Datensatzes der Größe des gesendeten Datensatzes entspricht, Feststellen (318) einer Datenintegrität des empfangenen Datensatzes;
wenn einer der Vergleiche einen Unterschied ergibt, Feststellen (320) einer Datenkorruption des empfangenen Datensatzes.

2. Verfahren nach einem der vorstehenden Ansprüche, ferner umfassend:
Verarbeiten (318) des empfangenen Datensatzes, wenn die Datenintegrität des empfangenen Datensatzes festgestellt wird.

3. Verfahren nach einem der vorstehenden Ansprüche, ferner umfassend:
Durchführen (320) einer vorgegebenen Maßnahme, wenn die Datenkorruption des empfangenen Datensatzes festgestellt wird.

4. Verfahren nach Anspruch 3, wobei das Durchführen der vorgegebenen Maßnahme umfasst:
Aussenden einer Fehlermeldung; und/oder
Erstellen eines Eintrags in einem Fehlerspeicher; und/oder Verwerfen des empfangenen Datensatzes.

5. Verfahren nach einem der vorstehenden Ansprüche, wobei das Vergleichen (316) der Größe des empfangenen Datensatzes mit der Größe des gesendeten Datensatzes umfasst:
Vergleichen, ob eine Größe der einzelnen Datenelemente des gesendeten Datensatzes jeweils mit einer Größe der einzelnen Datenelementen des empfangenen Datensatz übereinstimmt; und/oder
Vergleichen, ob eine Größe des gesamten gesendeten Datensatzes mit einer Größe des gesamten empfangenen Datensatz übereinstimmt.

6. Verfahren nach einem der vorstehenden Ansprüche, ferner umfassend, vor dem Empfangen des Datensatzes:
Senden (208) einer Anfrage (130) zum Senden des Datensatzes; und
Empfangen (302) des Datensatzes auf die Anfrage hin.

7. Verfahren zum Senden von Daten, umfassend folgende, durch eine Sendereinheit (120) ausgeführte Schritte:
Senden (214) eines Datensatzes aufweisend wenigstens eine Datenelement an eine Empfängereinheit (110);
Bestimmen (214) eines ersten Integritätsmerkmals des gesendeten Datensatzes, das eine Anzahl von Datenelementen des gesendeten Datensatzes charakterisiert, und eines zweiten Integritätsmerkmals des gesendeten Datensatzes, das eine Größe des gesendeten Datensatzes charakterisiert;
Senden (214) des ersten Integritätsmerkmals und des zweiten Integritätsmerkmals an die Empfängereinheit (110).

8. Verfahren nach Anspruch 7, ferner umfassend, vor dem Senden des Datensatzes:
Empfangen (210) einer durch die Empfängereinheit (110) gesendeten Anfrage (130) zum Senden eines Datensatzes; und
Senden (214) des Datensatzes auf das Empfangen der Anfrage hin.

9. Recheneinheit (110, 120), die dazu eingerichtet ist, alle Verfahrensschritte eines Verfahrens nach einem der vorstehenden Ansprüche durchzuführen.

10. Computerprogramm, das eine Recheneinheit (110, 120) dazu veranlasst, alle Verfahrensschritte eines Verfahrens nach einem der Ansprüche 1 bis 8 durchzuführen, wenn es auf der Recheneinheit (110, 120) ausgeführt wird.

11. Maschinenlesbares Speichermedium mit einem darauf gespeicherten Computerprogramm nach dem vorstehenden Anspruch.
